(19) Europäisches Patentamt
European Patent Office
Office européen des brevets

(11) **EP 1 022 696 A1**

(12) **EUROPÄISCHE PATENTANMELDUNG**

(43) Veröffentlichungstag:
26.07.2000 Patentblatt 2000/30

(51) Int. Cl.⁷: **G07F 7/10**, **H04L 9/08**

(21) Anmeldenummer: **00100812.7**

(22) Anmeldetag: **17.01.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.01.1999 DE 19902722**

(71) Anmelder:
**Giesecke & Devrient GmbH**
**81677 München (DE)**

(72) Erfinder: **Rankl, Wolfgang**
**94258 Frauenau (DE)**

(74) Vertreter:
**Klunker . Schmitt-Nilson . Hirsch**
**Winzererstrasse 106**
**80797 München (DE)**

(54) **Verfahren zum Austauschen von mindestens einem geheimen Anfangswert zwischen einer Bearbeitungsstation und einer Chipkarte**

(57) Die Erfindung betrifft ein Verfahren zum Austauschen von mindestens einem geheimen Anfangswert zwischen einer Bearbeitungsstation und einer Chipkarte, bei einem Initialisierungsschritt für die Chipkarte.

Bei bekannten Verfahren wird bei der Initialisierung der Chipkarten ein Anfangswert, z.B. ein Schlüssel, von einer Bearbeitungsstation zur Chipkarte übertragen und in dieser abgespeichert Da dieser Schlüssel im Klartext übertragen wird, entstehen Sicherheitsprobleme.

Bei der vorliegenden Erfindung werden die geschilderten Sicherheitsprobleme dadurch gelöst daß zwischen Bearbeitungsstation und Chipkarte nur Teile des Schlüssels ausgetauscht werden und der Schlüssel in der Chipkarte und der Bearbeitungsstation aus den Teilen erzeugt wird.

Fig.

**Beschreibung**

Die Erfindung betrifft ein Verfahren zum Austauschen von mindestens einem geheimen Anfangswert zwischen einer Bearbeitungsstation und einer Chipkarte, bei einem Initialisierungsschritt für die Chipkarte.

Derartige Verfahren sind bereits seit längerem bekannt und dienen bei der Herstellung von Chipkarten, die heute in vielen Bereichen, z.B. in Zugangskontrollsystemen oder als Zahlungsmittel verwendet werden, der sicheren Inbetriebnahme der Chipkarten. Die Chipkarte umfaßt üblicherweise einen integrierten Schaltkreis sowie Kopplungselemente, die leitend mit dem integrierten Schaltkreis verbunden sind und der Kommunikation mit externen Geräten, beispielsweise einer Bearbeitungsstation, dienen. Die Kopplungselemente sind entweder in Form von Kontaktflächen zur berührenden Kontaktabnahme oder auch als Spulen zur nicht berührenden Kontaktabnahme ausgebildet.

Bei den herkömmlichen Verfahren wird als letzter Schritt in der Herstellung der Chipkarte eine Initialisierung und Personalisierung der Chipkarte vorgenommen. Dabei werden die programmtechnischen Voraussetzungen geschaffen, alle Daten in den Speicherbereich des integrierten Schaltkreises zu laden, die für den späteren Betrieb der Chipkarte nötig sind. Bei der Initialisierung werden dazu alle global nötigen Daten übertragen und die nötigen Dateistrukturen angelegt. Bei der Personalisierung werden die individuellen Daten von der Bearbeitungsstation zur Chipkarte übertragen und in entsprechenden Speicherbereichen abgespeichert. Die zur Personalisierung benötigten Daten können beispielsweise Name, Anschrift und ein geheimer Schlüssel sein.

Um zu gewährleisten, daß die Personalisierungsdaten, insbesondere beispielsweise ein geheimer Schlüssel, bei der Personalisierung nicht abgehört werden können, um späteren Mißbrauch zu vermeiden, wird nach dem bekannten Verfahren üblicherweise die Initialisierung und Personalisierung in getrennten Prozeßschritten und auch teilweise in getrennten Räumen mit unterschiedlichem Personal durchgeführt. Während der Initialisierung wird dazu beispielsweise eine auf der Chipkarte gespeicherte Seriennummer an die Bearbeitungsstation übertragen. Zur Übertragung weist die Bearbeitungsstation ein Terminal auf. Außerdem ist in der Bearbeitungsstation üblicherweise ein Sicherheitsmodul vorhanden, an welches das Terminal die Nummer der Chipkarte weiterleitet. Im Sicherheitsmodul wird mit der Nummer der Chipkarte ein Schlüssel erzeugt, der an die Chipkarte mittels des Terminals übertragen wird.

Im nachfolgenden Personalisierungsschritt werden Daten aus einer Datenbank, die die zur Personalisierung nötigen Daten enthält, zur Chipkarte übertragen und in den entsprechenden Speicherbereichen der Chipkarte abgespeichert. Die Personalisierungsdaten der Personalisierungsdatenbank liegen üblicherweise verschlüsselt vor. Um einen Mißbrauch zu vermeiden, ist der Schlüssel zur Entschlüsselung der Personalisierungsdaten dem Hersteller der Chipkarte normalerweise nicht bekannt. Dieser Schlüssel ist nur der Institution bekannt, die die Personalisierungsdaten zur Verfügung stellt, beispielsweise einer Bank, die die als Zahlungsmittel verwendete Chipkarte ausstellt. Zur weiteren Verarbeitung der verschlüsselten Personalisierungsdaten werden diese ins Sicherheitsmodul der Bearbeitungsstation geladen. Das Sicherheitsmodul bietet eine separate Einheit, die besonders gegen Manipulationsversuche geschützt ist. Im Sicherheitsmodul ist der zur Entschlüsselung der Personalisierungsdaten benötigte Schlüssel enthalten. Mittels dieses Schlüssels werden die Personalisierungsdaten im Sicherheitsmodul entschlüsselt und anschließend mit dem bei der Initialisierung erzeugten Schlüssel, der zuvor vom Sicherheitsmodul aus in die Chipkarte geladen wurde, erneut verschlüsselt. Die so verschlüsselten Daten werden vom Sicherheitsmodul aus über das Terminal an die Chipkarte übertragen. Anschließend werden in der Chipkarte die verschlüsselten Daten mit dem bekannten Schlüssel entschlüsselt und in den entsprechenden Speicherbereichen des integrierten Schaltkreises der Chipkarte abgespeichert.

Das bekannte Verfahren weist somit den Nachteil auf, daß zumindest zu einem Zeitpunkt, nämlich bei der Initialisierung der Chipkarte, ein zur Datenübertragung zwischen einer Bearbeitungsstation und einer Chipkarte benötigter geheimer Schlüssel einmalig im Klartext übertragen werden muß. Falls dieser Schlüssel abgehört wird, können alle im später nachfolgenden Personalisierungsschritt übertragenen Daten und geheimen Schlüssel entschlüsselt werden. Falls es sich um einen kartenindividuellen Schlüssel handelt, wäre zumindest die Sicherheit dieser einen Karte gebrochen.

Aufgabe der vorliegenden Erfindung ist es deshalb, ein Verfahren zum Austauschen von mindestens einem geheimen Anfangswert zwischen einer Bearbeitungsstation und einer Chipkarte, bei der Initialisierung der Chipkarte, anzugeben, das gegenüber dem Stand der Technik eine größere Sicherheit aufweist und einfacher eingesetzt werden kann.

Die Aufgabe wird durch die Merkmale des Anspruchs 1 gelöst.

Die Erfindung geht dabei von der Überlegung aus, daß zu keinem Zeitpunkt zwischen der Bearbeitungsstation und der Chipkarte sensible Daten im Klartext übertragen werden. Dies wird dadurch erreicht, daß sowohl in der Bearbeitungsstation als auch in der Chipkarte Werte erzeugt werden, die nur zum Teil jeweils an die Chipkarte bzw. die Bearbeitungsstation übertragen werden. Aus den erzeugten und den übertragenen Werten werden dann sowohl in der Chipkarte als auch in der Bearbeitungsstation die geheimen Daten ermittelt.

Der besondere Vorteil der Erfindung liegt darin, daß zu keinem Zeitpunkt während der Initialisierung bzw. eines sich daran anschließenden Personalisierungsschritts geheime Daten im Klartext zwischen Bearbeitungsstation und Chipkarte übertragen werden müssen. Dadurch wird zum einen die Sicherheit des Initialisierungs- und Personalisierungsschritts erhöht, zum anderen vereinfacht sich die Initialisierung und Personalisierung, weil diese nicht mehr in getrennten Schritten durchgeführt werden müssen. Durch die dadurch erfolgende Reduzierung des nötigen Sicherheitsaufwands ergibt sich auch eine Reduzierung des Kostenaufwands bei der Chipkartenherstellung.

Weitere Vorteile der vorliegenden Erfindung ergeben sich aus den abhängigen Ansprüchen sowie der nachfolgenden Beschreibung anhand einer Figur.

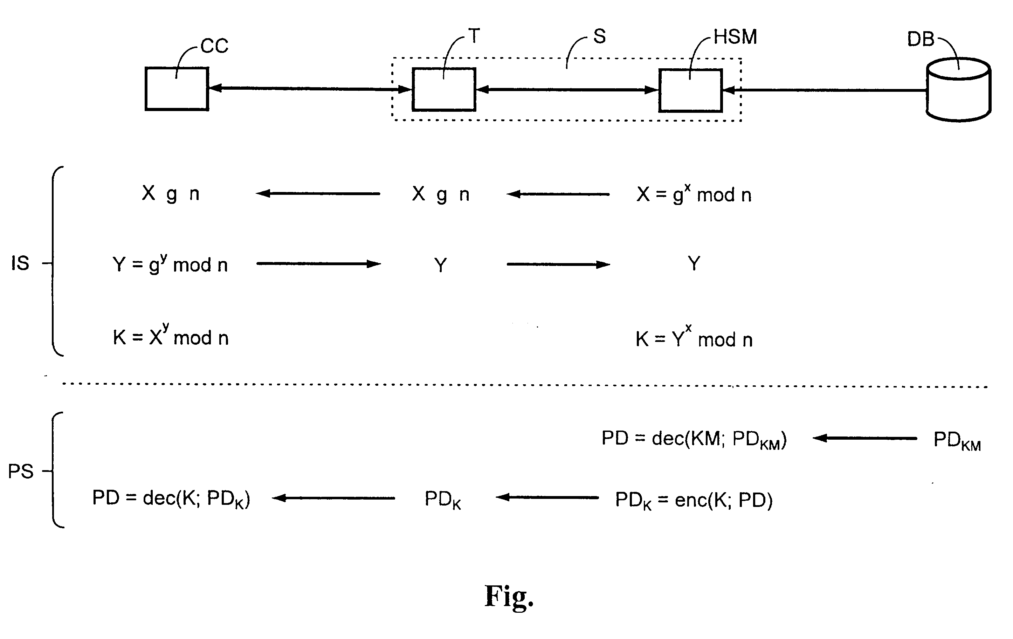

Die einzige Figur zeigt eine Bearbeitungsstation und eine Chipkarte bei der Initialisierung bzw. Personalisierung der Chipkarte.

In der Figur ist eine Bearbeitungsstation S, eine Chipkarte CC und eine Datenbank DB dargestellt. Die Bearbeitungsstation S enthält ein Terminal T das den Datenaustausch mit der Chipkarte CC herstellt sowie ein Sicherheitsmodul HSM, das zur Verarbeitung geheimer Daten dient. Diese geheimen Daten können beispielsweise von der Datenbank DB stammen. Außerdem ist in der Figur ein Initialisierungsschritt IS und ein Personalisierungsschritt PS dargestellt.

Wird eine neue Chipkarte CC zur Initialisierung in Verbindung mit dem Terminal T der Bearbeitungsstation S gebracht, kann zunächst die Echtheit der Chipkarte CC überprüft werden. Dies ist nötig, um auszuschließen, daß unberechtigte Chipkarten initialisiert werden und auf diese Weise unberechtigt an geheime Daten gelangen. Zur Überprüfung der Echtheit der Chipkarte CC kann beispielsweise überprüft werden, ob der auf der Chipkarte vorhandene integrierte Schaltkreis einem bestimmten Hersteller zuzuordnen ist. Zusätzlich kann außerdem eine Seriennummer, die bei der Herstellung des integrierten Schaltkreises erzeugt wurde, überprüft werden. Dazu wird die Seriennummer des auf der Chipkarte CC befindlichen integrierten Schaltkreises über das Terminal T ausgelesen. Die so ermittelte Seriennummer des integrierten Schaltkreises der Chipkarte CC wird anschließend im Sicherheitsmodul HSM auf Zulässigkeit überprüft. Dazu wird eine in der Datenbank DB abgelegte Liste von Seriennummern überprüft.

Nach erfolgter Echtheitsüberprüfung werden im Sicherheitsmodul HSM Werte erzeugt, die der Bestimmung eines geheimen Anfangswerts dienen, wobei der geheime Anfangswert im Sicherheitsmodul HSM und in der Chipkarte CC gleich sind, ohne daß der geheime Anfangswert im Klartext vom Sicherheitsmodul HSM über das Terminal T zur Chipkarte CC übertragen wird. Teile der Werte, die im Sicherheitsmodul HSM erzeugt wurden, werden über das Terminal T an die Chipkarte CC übertragen. In der Chipkarte CC werden weitere Werte zur Bestimmung des geheimen Anfangswerts erzeugt, von denen wiederum Teile an die Bearbeitungsstation S über das Terminal T übertragen werden. Anschließend wird der geheime Anfangswert in der Bearbeitungsstation, d.h. im Sicherheitsmodul HSM, aus den Werten, die im Sicherheitsmodul HSM erzeugt wurden und den von der Chipkarte übertragenen Werten bestimmt. In der Chipkarte CC erfolgt die Bestimmung des geheimen Anfangswerts mittels der in der Chipkarte erzeugten Werte und den von der Bearbeitungsstation übertragenen Werten.

Der geheime Anfangswert kann beispielsweise ein Startwert für die Erzeugung von Zufallszahlen sein. Außerdem kann der geheime Anfangswert auch als geheimer Schlüssel für die Verschlüsselung und Entschlüsselung von Daten verwendet werden.

Wird der geheime Anfangswert als Schlüssel verwendet, können beispielsweise in einem nachfolgenden Bearbeitungsschritt Personalisierungsdaten, die unter anderem weitere geheime Schlüssel enthalten, an die Chipkarte CC übertragen werden.

Der geheime Anfangswert kann aus den im Sicherheitsmodul HSM und in der Chipkarte CC erzeugten Werten beispielsweise mittels Algorithmen oder Funktionen erzeugt werden. Besonders vorteilhaft ist es, wenn sowohl im Sicherheitsmodul HSM als auch in der Chipkarte CC zur Erzeugung des geheimen Anfangswertes die gleiche Funktion verwendet wird. Dazu ist in der Figur für den Initialisierungsschritt IS eine Funktion vorgesehen, die eine erste Variable oder einen ersten Wert mit einem zweiten Wert potenziert und ein Modulorest zu einem dritten Wert gebildet wird. Im Sicherheitsmodul HSM werden die Werte g, n und x erzeugt. Der Wert n ist eine große Primzahl, der Wert g eine primitive Zahl, d.h., alle Zahlen 1....n-1 können in der Form $g^i$ mod n dargestellt werden. Zur Erhöhung der Sicherheit sollte sichergestellt werden, daß der Wert (n-1)/2 ebenfalls eine Primzahl ist. Der außerdem im Sicherheitsmodul HSM erzeugte Wert x ist eine Zufallszahl, für die gilt x < n. Mittels der Funktion

$$X = g^x \bmod n \qquad (1)$$

werden die Werte g n und X verarbeitet. Anschließend werden die Werte g, n und X über das Terminal T an die Chipkarte CC übertragen. Der Wert x wird im Sicherheitsmodul geheimgehalten. In der Chipkarte wird mittels einer weiteren Funktion

$$Y = g^y \bmod n \qquad (2)$$

ein Wert Y erzeugt. Dazu werden die von der Bearbeitungsstation übertragenen Werte g und n sowie ein in der Chipkarte erzeugter Wert y verwendet. Für den Wert y gilt y < n. Der Wert y ist eine Zufallszahl, die insbesondere in Abhängigkeit einer individuellen Kennung der Chipkarte CC, z.B. einer Seriennummer, erzeugt wird. Der Wert y wird in der Chipkarte CC geheimgehalten, wohingegen der Wert Y an die Bearbeitungsstation S übertragen wird. In der Bearbeitungsstation S wird im Sicherheitsmodul HSM mittels einer Funktion

$$K = Y^x \bmod n \qquad (3)$$

der geheime Anfangswert, der als Schlüssel verwendet wird, erzeugt. In der Chipkarte CC wird der gleiche geheime Anfangswert K erzeugt

$$K = X^y \bmod n. \qquad (4)$$

Die Gleichheit des geheimen Anfangswerts K in Chipkarte CC und Sicherheitsmodul HSM ist gewährleistet, da wegen des Austauschs der Werte zwischen Chipkarte CC und Sicherheitsmodul HSM für K gilt:

$$K = g^{xy} \bmod n. \qquad (5)$$

Mittels des nunmehr sowohl im Sicherheitsmodul HSM als auch in der Chipkarte CC vorhandenen geheimen Schlüssels K kann in einem nachfolgenden Personalisierungsschritt PS die sichere Übertragung geheimer Personalisierungsdaten vorgenommen werden. Dazu werden aus der Datenbank DB Personalisierungsdaten $PD_{KM}$, die mit einem Hauptschlüssel KM verschlüsselt sind, an das Sicherheitsmodul HSM übertragen. Der Hauptschlüssel KM ist im Sicherheitsmodul HSM vorhanden und wird zur Dekodierung der Personalisierungsdaten $PD_{KM}$ verwendet. Die nunmehr im Klartext vorliegenden Personalisierungsdaten PD werden in einem weiteren Schritt wieder verschlüsselt. Dazu wird der geheime Schlüssel K verwendet. Die so erzeugten verschlüsselten Personalisierungsdaten $PD_K$ werden über das Terminal T an die Chipkarte CC übertragen, wo sie mit dem ebenfalls vorhandenen geheimen Schlüssel K dekodiert werden.

Nach Beendigung des Personalisierungsschritts PS kann der geheime Schlüssel K sowohl in der Chipkarte als auch im Sicherheitsmodul HSM gelöscht werden, da für die weitere Kommunikation zwischen Bearbeitungsstation S und Chipkarte CC beispielsweise die in den Personalisierungsdaten PD enthaltenen geheimen Schlüssel verwendet werden können.

Initialisierungs- und Personalisierungsschritte der oben beschriebenen Art können nicht nur bei der Herstellung von Chipkarten eingesetzt werden, wie eingangs erwähnt, sondern auch der späteren Erweiterung von Chipkarten dienen. Beispielsweise um eine Chipkarte nachträglich um weitere Anwendungen zu erweitern. Eine Chipkarte die bisher nur als Kreditkarte konfiguriert war, kann z.B. um eine Zugangskontrollanwendung erweitert werden.

**Patentansprüche**

1. Verfahren zum Austauschen von mindestens einem geheimen Anfangswert zwischen einer Bearbeitungsstation und einer Chipkarte, bei einem Initialisierungsschritt für die Chipkarte, wobei

   - in der Bearbeitungsstation erste Werte zur Bestimmung des geheimen Anfangswerts erzeugt werden,
   - Teile der ersten Werte an die Chipkarte übertragen werden,
   - in der Chipkarte zweite Werte zur Bestimmung des geheimen Anfangswerts erzeugt werden,
   - Teile der zweiten Werte an die Bearbeitungsstation übertragen werden,
   - der geheime Anfangswert in der Bearbeitungsstation aus zumindest Teilen der ersten Werte und den übertragenen Teilen der zweiten Werte bestimmt wird, und
   - der geheime Anfangswert in der Chipkarte aus zumindest Teilen der zweiten Werte und den übertragenen Teilen der ersten Werte bestimmt wird.

2. Verfahren nach Anspruch 1, dadurch **gekennzeichnet,** daß mindestens ein Teil der in der Chipkarte erzeugten zweiten Werte in Abhängigkeit von einer in der Chipkarte vorhandenen individuellen Kennung, insbesondere einer Seriennummer, erzeugt wird.

3. Verfahren nach Anspruch 1 oder 2, dadurch **gekennzeichnet,** daß

   - die in der Bearbeitungsstation erzeugten ersten Werte einer ersten Funktion unterworfen werden,
   - das Ergebnis der ersten Funktion zusätzlich zum Teil der erzeugten ersten Werte an die Chipkarte übertragen wird,
   - mindestens ein Teil der in der Chipkarte erzeugten zweiten Werte mit dem übertragenen Teil der ersten Werte einer zweiten Funktion unterworfen wird,
   - das Ergebnis der zweiten Funktion an die Bearbeitungsstation übertragen wird,
   - der geheime Anfangswert in der Bearbeitungsstation mittels einer dritten Funktion aus dem übertragenen Ergebnis der zweiten Funktion und einem Teil der ersten Werte, insbesondere dem nicht zur Chipkarte übertragenen ersten Teil der Werte, erzeugt wird, und
   - der geheime Anfangswert in der Chipkarte mittels einer vierten Funktion aus dem übertragenen Ergebnis der ersten Funktion, dem übertragenen Teil der ersten Werte und mindestens einem Teil der zweiten Werte, insbesondere dem nicht zur Bearbeitungsstation übertragenen Teil der zweiten Werte, erzeugt wird.

**4.** Verfahren nach Anspruch 3, dadurch **gekennzeichnet,** daß erste, zweite, dritte und vierte Funktion gleich sind.

**5.** Verfahren nach Anspruch 4, dadurch **gekennzeichnet,** daß als Funktion eine erste Variable mit einer zweiten Variablen potenziert wird und ein Modulorest zu einer dritten Variablen gebildet wird, wobei die Variablen den ersten und zweiten Werten sowie dem ersten und zweiten Ergebnis entsprechen.

**6.** Verfahren nach einem der Ansprüche 1 bis 5, dadurch **gekennzeichnet,** daß der geheime Anfangswert ein Startwert für die Erzeugung von Zufallszahlen ist.

**7.** Verfahren nach einem der Ansprüche 1 bis 5, dadurch **gekennzeichnet,** daß der geheime Anfangswert ein Schlüssel für die Verschlüsselung und Entschlüsselung von Daten ist.

**8.** Verfahren nach Anspruch 7, dadurch **gekennzeichnet,** daß der in Bearbeitungsstation und Chipkarte erzeugte Schlüssel in einem Personalisierungsschritt zur Ver- und Entschlüsselung von Personalisierungsdaten, insbesondere weiteren geheimen Schlüsseln, verwendet wird, die von der Bearbeitungsstation zur Chipkarte übertragen werden.

**9.** Verfahren nach Anspruch 8, dadurch **gekennzeichnet,** daß der in der Bearbeitungsstation und der Chipkarte erzeugte Schlüssel nach dem Personalisierungsschritt in der Bearbeitungsstation und der Chipkarte gelöscht wird.

EP 1 022 696 A1

CC    T    S    HSM    DB

IS

$X \quad g \quad n \quad \longleftarrow \quad X \quad g \quad n \quad \longleftarrow \quad X = g^x \bmod n$

$Y = g^y \bmod n \quad \longrightarrow \quad Y \quad \longrightarrow \quad Y$

$K = X^y \bmod n \qquad\qquad K = Y^x \bmod n$

PS

$PD = dec(KM;\ PD_{KM}) \quad \longleftarrow \quad PD_{KM}$

$PD = dec(K;\ PD_K) \quad \longleftarrow \quad PD_K \quad \longleftarrow \quad PD_K = enc(K;\ PD)$

**Fig.**

Europäisches
Patentamt

## EUROPÄISCHER RECHERCHENBERICHT

Nummer der Anmeldung

EP 00 10 0812

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | B. SCHNEIER: "APPLIED CRYPTOGRAPHY" 1996 , JOHN WILEY & SONS , US, NEW YORK XP002137487 218930 | 1,3,4 | G07F7/10 H04L9/08 |
| A | * Seite 513 - Seite 514 * | 5 | |
| Y | R.E. LENNON ET ALL.: "COMPOSITE TIME-VARIANT RANDOM NUMBERS" IBM TECHNICAL DISCLOSURE BULLETIN, Bd. 26, Nr. 7A, Dezember 1983 (1983-12), Seiten 3292-3293, XP002137529 | 1,3,4 | |
| A | * das ganze Dokument * | 2,7 | |
| A | US 5 602 915 A (M. CAMPANA) 11. Februar 1997 (1997-02-11) * das ganze Dokument * | 1,2,7 | |
| A | EP 0 281 057 A (SIEMENS) 7. September 1988 (1988-09-07) * das ganze Dokument * | 1,6 | |
| A | EP 0 281 059 A (SIEMENS) 7. September 1988 (1988-09-07) * das ganze Dokument * | 1,7 | RECHERCHIERTE SACHGEBIETE (Int.Cl.7) |
| A | EP 0 500 245 A (TOSHIBA) 26. August 1992 (1992-08-26) * Zusammenfassung; Ansprüche; Abbildungen * | 1,8,9 | G07F H04L |
| A | US 4 200 770 A (M.E. HELLMAN) 29. April 1980 (1980-04-29) | | |
| A | DE 28 11 872 C (ANT NACHRICHTENTECHNIK ) 7. Januar 1993 (1993-01-07) | | |
| A | FR 2 759 833 A (GEMPLUS) 21. August 1998 (1998-08-21) | | |

Der vorliegende Recherchenbericht wurde für alle Patentansprüche erstellt

| Recherchenort | Abschlußdatum der Recherche | Prüfer |
|---|---|---|
| DEN HAAG | 12. Mai 2000 | David, J |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes
 Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 10 0812

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-05-2000

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5602915 | A | 11-02-1997 | FR | 2702066 | A | 02-09-1994 |
| | | | DE | 69408176 | D | 05-03-1998 |
| | | | DE | 69408176 | T | 30-07-1998 |
| | | | EP | 0613105 | A | 31-08-1994 |
| EP 0281057 | A | 07-09-1988 | DE | 3706955 | A | 15-09-1988 |
| | | | AT | 105642 | T | 15-05-1994 |
| | | | DE | 3889481 | D | 16-06-1994 |
| | | | ES | 2051780 | T | 01-07-1994 |
| | | | JP | 63228353 | A | 22-09-1988 |
| | | | US | 4974193 | A | 27-11-1990 |
| EP 0281059 | A | 07-09-1988 | AT | 98034 | T | 15-12-1993 |
| | | | DE | 3885916 | D | 13-01-1994 |
| | | | JP | 63229545 | A | 26-09-1988 |
| | | | US | 4951247 | A | 21-08-1990 |
| EP 0500245 | A | 26-08-1992 | JP | 2901767 | B | 07-06-1999 |
| | | | JP | 4256196 | A | 10-09-1992 |
| | | | DE | 69214977 | D | 12-12-1996 |
| | | | DE | 69214977 | T | 20-03-1997 |
| | | | HK | 1001703 | A | 03-07-1998 |
| | | | US | 5381478 | A | 10-01-1995 |
| US 4200770 | A | 29-04-1980 | KEINE | | | |
| DE 2811872 | C | 07-01-1993 | KEINE | | | |
| FR 2759833 | A | 21-08-1998 | AU | 6504298 | A | 09-09-1998 |
| | | | WO | 9837525 | A | 27-08-1998 |

Für nähere Einzelheiten zu diesem Anhang : siehe Amtsblatt des Europäischen Patentamts, Nr. 12/82